# EUROPÄISCHE PATENTSCHRIFT

(11) **EP 1 946 633 B1**
(45) Veröffentlichungstag und Bekanntmachung des Hinweises auf die Patenterteilung: **26.05.2010**
(21) Anmeldenummer: 07023404.2
(22) Anmeldetag: 04.12.2007
(51) Int. Cl.: A01D 78/10

(54) **Heuwerbungsmaschine**
Hay-making machine
Machine de fenaison

(30) Priorität: 17.01.2007 DE 102007003301
(43) Veröffentlichungstag der Anmeldung: 23.07.2008
(73) Patentinhaber: CLAAS Saulgau GmbH, 88348 Bad Saulgau (DE)
(72) Erfinder: Frick, Clemens, 88356 Ostrach (DE); Lahmann, Dirk, 88723 Fronreute-Blitzenreute (DE); Schelkle, Roland, 88348 Bad Saulgau (DE)

(56) Entgegenhaltungen:
- EP-A- 0 713 640
- EP-A- 1 169 909
- EP-A- 1 277 394

## Beschreibung

Die Erfindung betrifft eine Heuwerbungsmaschine gemäß dem Oberbegriff des unabhängigen Anspruchs 1.

Marktanforderungen in der Grünfutterernte fragen nach größeren Arbeitsbreiten bei den Kreiselschwadern nach. Diese ist u.a. zu befriedigen durch größere Durchmesser der Rechkreisel, beispielsweise bis zu etwa 4m Durchmesser. Diese neue Generation von Rechkreiseldurchmessern bringt Probleme hervor, die völlig neue Lösungsansätze fordern. Dieses betrifft insbesondere die Anpassung der Rechkreisel an die Bodenkontur.

### Stand der Technik

Derartige Kreiselschwader verfügen über wenigstens einen Rechkreisel, der mittels eines Fahrwerks in seinem Betriebszustand gegenüber dem Boden abgestützt ist. Ein Rechkreisel besteht im Wesentlichen aus umlaufenden, um eine Hochachse angetriebenen, mit gesteuerten Zinkenarmen und Rechzinken bestückten Rechkreisel, dessen Zinkenarme von einer Kurvenbahn über Rollenhebel gesteuert, in einem an der Drehbewegung teilnehmenden Gehäuse gelagert sind, einem Winkelgetriebe als Antriebselement der Rechkreisel, und einer am Maschinengestell abgestützten feststehenden Zentralachse, auf der die an der Rotation teilnehmenden Elemente des Rechkreisel abgestützt und gelagert sind.

Im allgemeinen sorgen die Räder des Fahrwerks, ausgebildet als Stütz- und Tasträder, unterhalb des Rechkreisels für die Bodenanpassung der Rechzinken. Angestrebt ist dabei das Ziel, den Abstand zwischen den Zinkenspitzen und dem Boden während des Rechvorgangs möglichst konstant zu halten. Dabei übernimmt die Schwerkraft die Funktion, den Bodenkontakt zwischen den Rädern des Fahrwerks eines Rechkreisels zu sichern.

Des weiteren ist die Technik der kardanischen Kreiselaufhängung in Verbindung mit vorlaufenden oder nachlaufenden Tasträdern bekannt, die eine Verbesserung der Bodenanpassung der Rechkreisel bewirken soll. Dennoch können auch dabei bei extremen Bodenunebenheiten die Zinkenspitzen in den Boden einstechen und dadurch Futterverschmutzungen herbeiführen.

Die Höheneinstellung der Zinken gegenüber dem Boden kann entweder manuell unterhalb des Rechkreisels durch Betätigung einzelner Stellelemente erfolgen, mit denen die Höhenlage der Stütz- und Tasträder relativ zu den Zinkenspitzen der Rechzinken veränderbar ist, oder dieses erfolgt durch eine zentrale Verstellung der Höhenlage der Stütz- und Tasträder, beispielsweise mittels einer Gewindespindel oder eines Hydraulikzylinders. Im Falle der zentralen Verstellung wird die Stellspindel bzw. werden die hydraulischen Schlauchleitungen durch die Zentralachse des Schwadgetriebes des Rechkreisels, die als Hohlachse ausgeführt ist, hindurch geführt.

Die Fahrwerke derartiger Rechkreisel, die unterhalb des rotierenden Teils eines Rechkreisels angeordnet sind, sind als drei- oder vierrädrige Fahrwerke ausgebildet. In jedem Fall sind die maximalen Radabstände und die Raddurchmesser von den Begrenzungen des Bauraums unterhalb eines Rechkreisels abhängig, welches sich insbesondere beschränkend auf den maximalen Raddurchmesser der Stützräder auswirkt. Nachteilig bei dieser Ausführung ist, dass dabei die Gewichtskraft des Rechkreisels zumindest teilweise als Stützkraft vom Fahrwerk gegenüber dem Boden abgestützt werden muss, wobei der Kraftfluss bauartbedingt über die Zentralachse des Zentralgetriebes und infolge dessen über die Einspannstelle der Zentralachse im Zentralgetriebe der Rechkreisels verlaufen muss.

Um die Bodenanpassung der Rechkreisel zu verbessern und um einen ruhigeren Lauf herbeizuführen, werden u.a. Fahrwerke mit Doppelschwingen unterhalb der Rechkreisel angeordnet. Das Fahrwerk ist am unteren Ende der feststehenden Kreiselachse angebracht und die Doppelschwingen nehmen zwei Stütz- und Tasträder auf. Dennoch können bei stark kopierten Bodenwellen die Zinkenspitzen der Rechkreisel in den Boden eindringen, welches zu Zinkenbrüchen und zu Futterverschmutzungen führen kann.

Um diesen Nachteil zu beseitigen, sind Ausführungen von Rechkreiseln bekannt, bei denen ein weiteres und zusätzliche Tasträder eingesetzt werden, die dem Fahrwerk eines Rechkreisels außerhalb seines Bauraums vor oder nachgeordnet sind. Diese Bauarten sind aufwendig und daher sind die erfinderischen Überlegungen darauf gerichtet, eine kostengünstigere und einfachere Lösung vorzuschlagen, die zudem die vorgenannten Nachteile vermeidet.

### Aufgabenstellung

Aufgabe der Erfindung ist es, eine Heuwerbungsmaschinen insbesondere Kreiselschwader mit großen Rechkreiseln vorzuschlagen, die trotz der großen Durchmesser laufruhig und bodenkopierend gegenüber dem Boden abgestützt und geführt werden, wodurch der Einstich der Rechzinken in den Boden weitestgehend vermieden und dadurch die Erntegutverschmutzung auf ein Minimum reduziert wird.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Ein Kreiselschwader nach der Erfindung weist einen Rechkreisel mit einem Fahrwerk mit wenigstens sechs Tast- und Stützrädern auf, die an wenigstens drei Doppelschwingen unterhalb der Rechkreisel gelagert sind. Diese Tast- und Stützräder werden von einem Fahrgestell, welches mit der aufrechten Kreiselachse drehfest verbunden ist, aufgenommen. Das Fahrgestell ist dabei so ausgebildet, dass die Tast- und Stützräder etwa auf einem gemeinsamen Kreis zentrisch zur Kreiselachse möglichst nahe der Rechzinken laufen.

Zwei Doppelschwingen sind im Wesentlichen in Fahrtrichtung verlaufend und die dritte Doppelschwinge, ausgebildet als Querjoch, quer zur Fahrtrichtung verlaufend, ausgerichtet.

In einer weiteren Ausgestaltung der Erfindung kann an beiden Enden des Querjochs eine weitere Doppelschwinge aufnehmende Stützräder gelenkig angeschlagen sein, so dass in diesem Ausführungsbeispiel auch acht Stützt- und Tasträder in Bodenkontakt stehen können, ohne dass diese statisch überbestimmt sind und den Bodenkontakt verlieren können.

Diese Art der Ausgestaltung des Fahrgestells mit dieser Anordnung der Tast- und Stützräder beinhaltet trotz der erheblichen Anzahl an Tast- und Stützrädern die Möglichkeit der kardanischen Bodenanpassung der Zinkenkreisel, wobei alle Laufräder bei gleichzeitigen Nick- und Rollbewegungen des Zinkenkreisels in Bodenkontakt bleiben. Große Radabstände und eine breitere Spur sorgen dabei für eine erhöhte Laufruhe bei guter Hangstabilität gegen Abdriften durch Hangabtriebskräfte.

Auch bei dieser Ausführung nach der Erfindung kann die Ansteuerung aller Laufräder in bezug auf die Höhenverstellung eines Rechkreisels zentral mittels einer Zentralsteuerung fernbedienbar oder manuell mittels eines Kurbelmechanismus in an sich bekannter weise erfolgen.

Es liegt daher im Können und Wissen eines Fachmanns, eine derartige Höhenverstellung zu gestalten, so dass an dieser Stelle aus Gründen der Vereinfachung darauf verzichtet werden kann, einen derartigen Verstellmechanismus näher zu beschreiben. Die weiteren Ausführungen begnügen sich mit der Darstellung der Erfindung anhand eines einzelnen Rechkreisels, da dem Fachmann die grundsätzliche Ausführung derartiger Kreiselschwader als Einzel- Seiten- oder Mittelschwader bekannt ist und daher auf die Beschreibung derartiger Kreiselschwader verzichtet werden kann.

### Ausführungsbeispiel

Anhand der nachfolgen Figurendarstellungen eines einzelnen Rechkreisels ist die Erfindung an einem Ausführungsbeispiel näher dargestellt und erläutert:

Es zeigen im einzelnen:
- Fig. 1: zeigt einen freigelegten Rechkreisels nach der Erfindung in einer Draufsicht
- Fig. 2: zeigt den Rechkreisel gemäß Fig.1 in einer Seitenansicht
- Fig.3: zeigt den Rechkreisel gemäß Fig.1 in einer Ansicht von hinten in Fahrtrichtung gesehen.
- Fig. 4: zeigt ein Ausführungsbeispiel für ein Stützfahrwerk mit dessen Fahrgestell nach der Erfindung.
- Fig. 5: zeigt eine Doppelschwinge des Rechkreisels gemäß Fig. 1 in einer perspektivischen Ansicht von der Seite.
- Fig. 6: zeigt ein weiteres Ausführungsbeispiel für ein Stützfahrwerk mit dessen Fahrgestell nach der Erfindung.

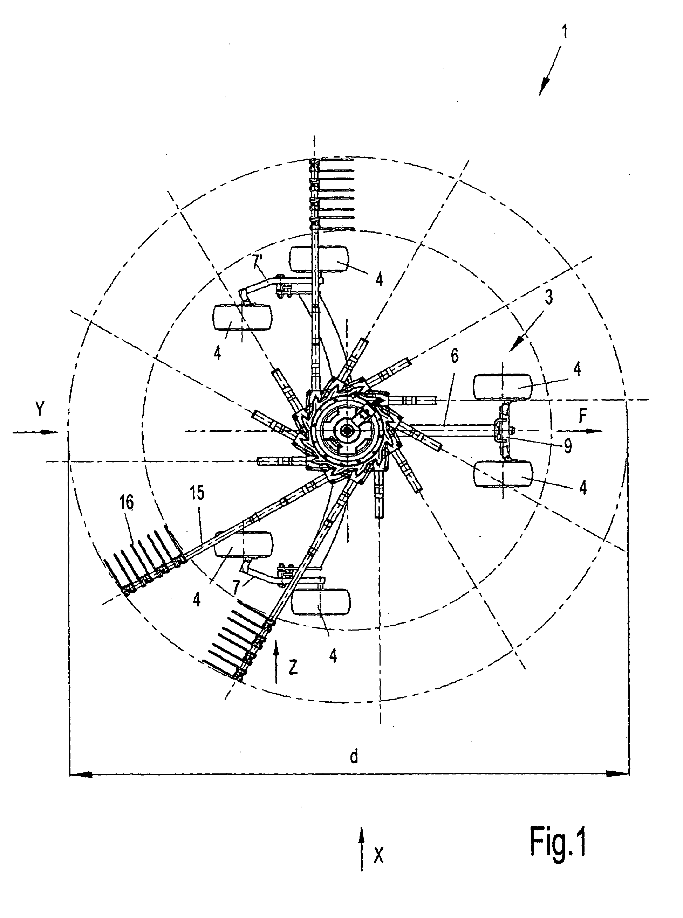

In Fig. 1 ist ein Ausführungsbeispiel der Erfindung dargestellt am Beispiel eines einzelnen Rechkreisels 1 in einer Draufsicht, d.h. in einer Ansicht von oben auf die Aufstandsfläche des Fahrwerks 3. Im Zentrum des Rechkreisels 1 ist das Zentralgetriebe 2 zum Antrieb des Rechkreisels mit dessen Kurvenbahnsteuerung zur Steuerung der Aushebung der Rechzinken 16 und deren Zinkenarme 15 während ihres Umlaufs um die Kreiselachse 5 in bekannter weise angeordnet. Der besseren Übersicht halber sind nur einige Zinkenarme 15 mit deren Rechzinken 16 dargestellt. Der Durchmesser des Rechkreisels 1 soll im Bereich von 3500 bis 4500 mm, vorzugsweise bei etwa 3800 mm liegen. Das Fahrwerk 3 des Rechkreisels 1 ist mit einer feststehenden aufrechten Kreiselachse 5 des Rechkreisels drehfest verbunden, wobei sich diese Kreiselachse 5 wiederum in bekannter weise an dem Maschinengestell des Kreiselschwaders abstützt.

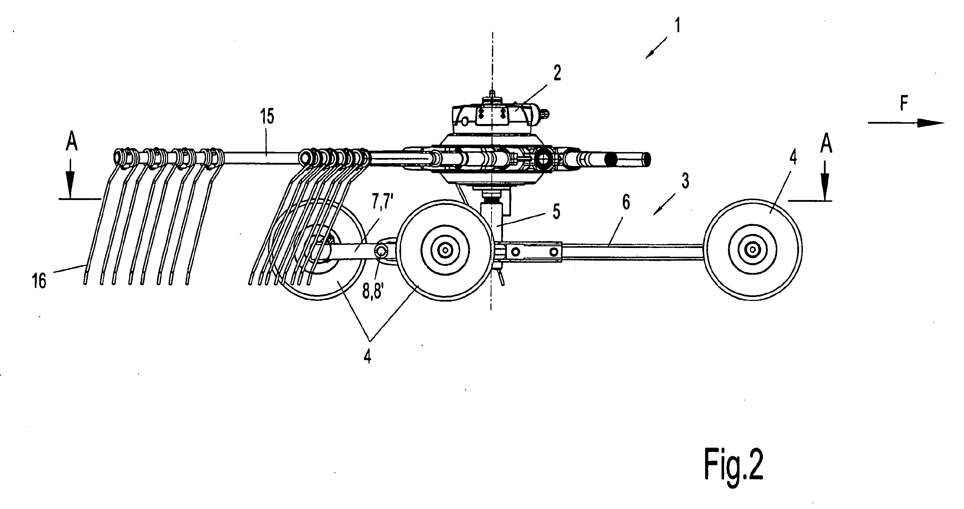

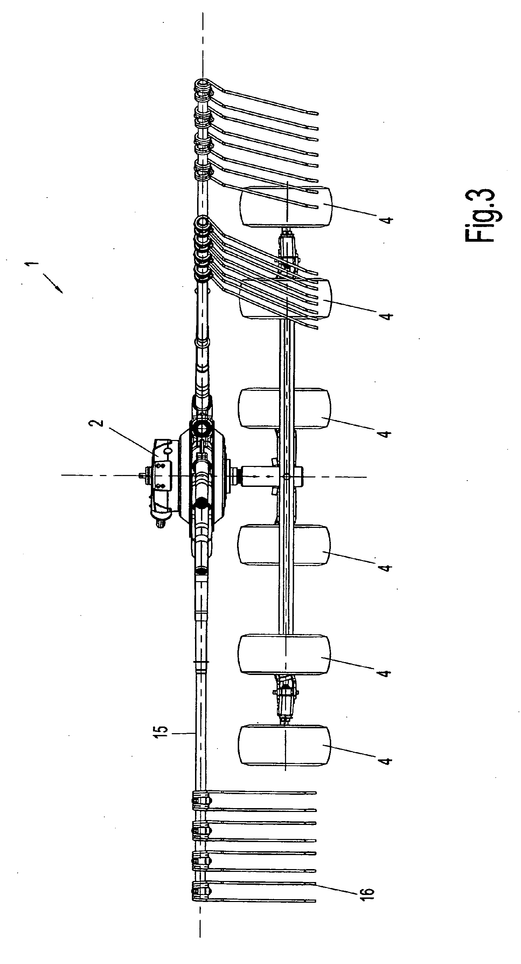

Fig. 2 zeigt den Rechkreisel gemäß Fig.1 in einer Seitenansicht mit Blickrichtung X quer zur Fahrtrichtung F und Fig. 3 zeigt den Rechkreisel gemäß Fig.1 in einer Ansicht in Richtung Y von hinten in Fahrtrichtung F gesehen.

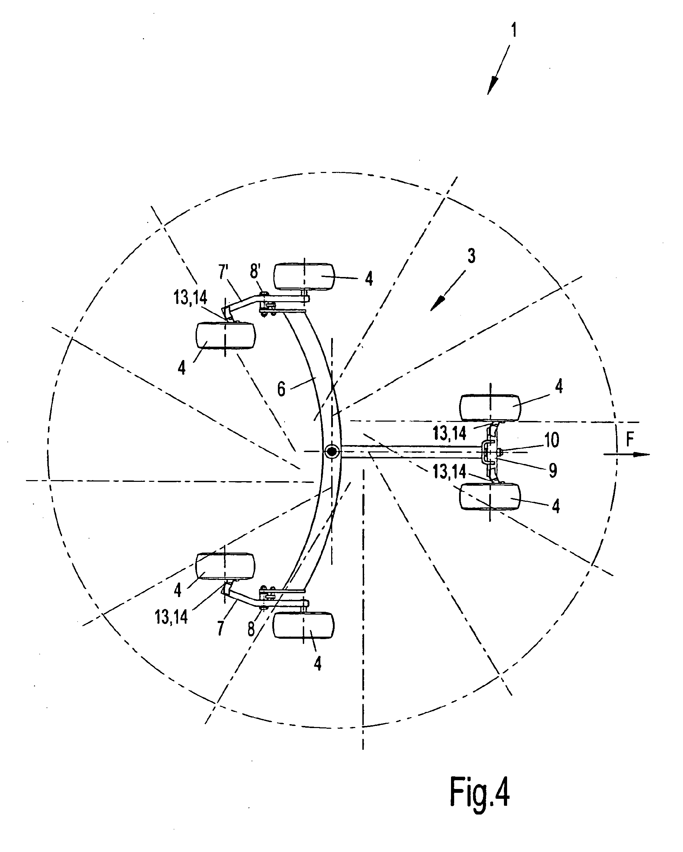

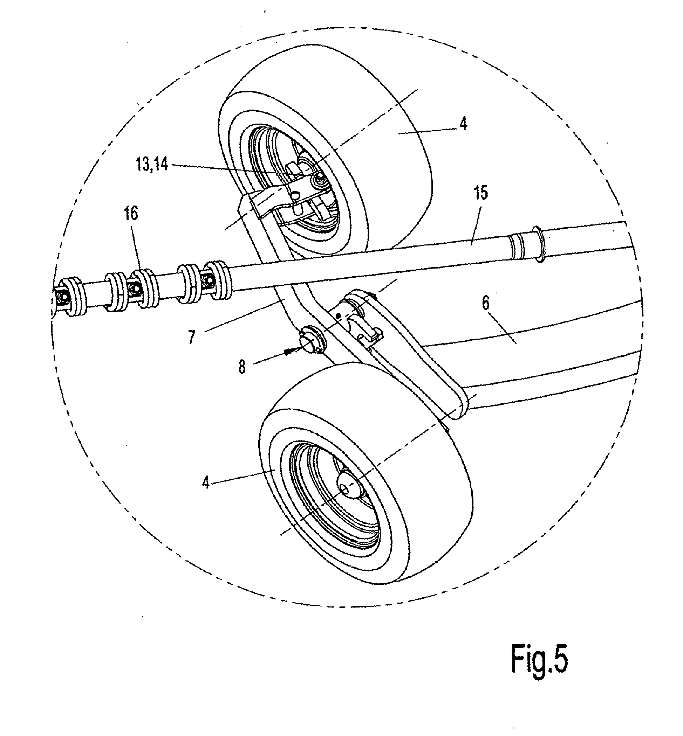

Fig. 4 zeigt das freigelegte Stützfahrwerk gemäß Schnitt A-A mit dessen Fahrgestell nach der Erfindung gemäß Fig. 1. Fig. 5 zeigt gemäß Ansicht Z eine Doppelschwinge des Rechkreisels gemäß Fig. 1 in einer perspektivischen Ansicht von der Seite.

Fig. 1 zeigt einen Rechkreisel (1) mit einem Fahrwerk (3) mit sechs Tast - und Stützrädern (4) dessen Stützräder (4) von Doppelschwingen (7,7',9) aufgenommen werden und an diesen gehaltert und gelagert sind. Die Doppelschwingen (7,7',9) sind jeweils mittels Pendelachsen (8,8',10) frei beweglich an dem Fahrwerksrahmen 6 gehaltert. Dabei sind zwei Pendelachsen (8,8') etwa quer zur Fahrtrichtung (F) und eine Pendelachse (10) etwa in Fahrtrichtung (F) verlaufend zueinender ausgerichtet. Dabei ist die hintere Doppelschwinge (9) als frei um eine Pendelachse (10) drehbeweglich gelagertes Querjoch ausgebildet.

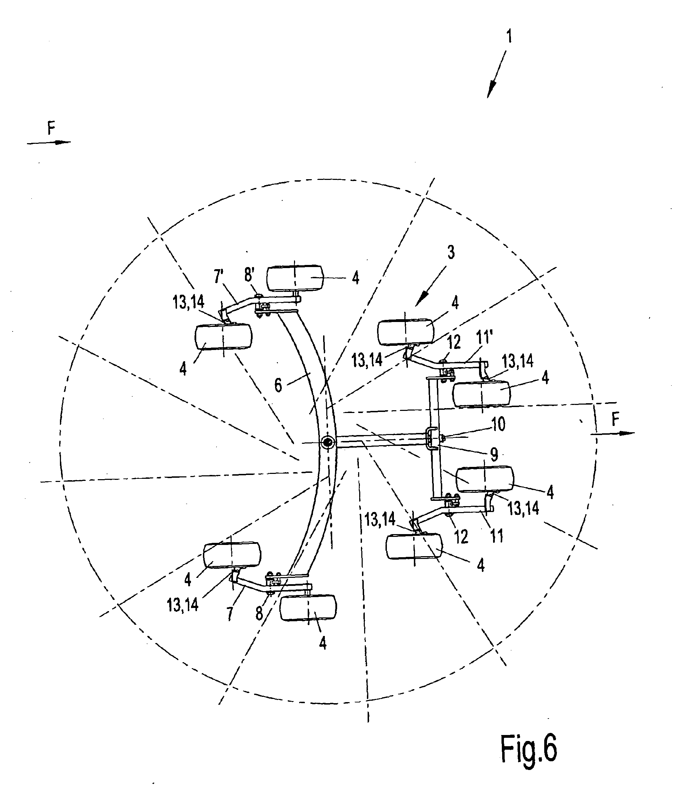

In einer weiteren Ausgestaltung der Erfindung gemäß Fig. 6 kann das Querjoch (10) beidendseitig je eine weitere Pendelachse (12,12') aufweisen an denen weitere Doppelschwingen (11,11') aufnehmende Tast- und Stützräder (4) gelagert sind.

Damit es in Kurvenfahrten nicht zu Schurrungen an Tast- und Stützrädern kommt, die nicht exakt auf einem Kurvenradius laufen, werden zweckmäßiger Weise bis auf zwei gegenüber liegende Tast- und Stützräder die übrigen an Achsschenkelbolzen 14 mit Hochachsen 13 geführt, so dass sich diese um diese Hochachsen ausrichtend als Nachlaufräder auf den momentanen Kurvenradius einstellen können.

In dem dargelegten Ausführungsbeispiel liegt das Querjoch 9 in Fahrtrichtung F vor der Kreiselachse 5. Es liegt im Wesen der Erfindung, dass dieses auch umgekehrt sein kann, d.h., dass das Querjoch 9 auch in Fahrtrichtung F gesehen hinter der Kreiselachse 5 liegen kann und die übrigen Doppelschwingen 7,7' vor der Kreiselachse 5 liegen können.

### Bezugszeichenliste

- 1: Rechkreisel
- 2: Zentralgetriebe
- 3: Fahrwerk
- 4: Tast- und Stützrad
- 5: Kreiselachse
- 6: Rahmenkonstruktion
- 7,7': Doppelschwinge
- 8,8': Pendelachse
- 9: Doppelschwinge, Querjoch
- 10: Pendelachse
- 11,11': Doppelschwinge
- 12,12': Pendelachse
- 13: Hochachse
- 14: Achsschenkelbolzen
- 15: Zinkenarm
- 16: Rechzinken

- F: Fahrtrichtung
- d: Kreiseldurchmesser

## Patentansprüche

1. Heuwerbungsmaschine zum Zusammenrechen von am Boden liegendem Erntegut mit wenigstens einem um eine aufwärts gerichtete Kreiselachse umlaufend antreibbaren mit Rechzinken bestückten Rechkreisel, der am Boden durch *ein Fahrwerk* mit Tast- und Stützräder bodenkopierend mittels wenigstens an drei Doppelschwingen aufweisenden wenigstens zwei Tast- und Stützrädern abstützbar ist, **dadurch gekennzeichnet, dass** jede Doppelschwinge (7,7',9), *aufgenommen von Pendelachsen des Fahrwerks*, Tast- und Stützräder (4) aufweist, die etwa auf einem gemeinsamen Kreis zentrisch zur Kreiselachse möglichst nahe der Rechzinken laufen, wobei bis auf zwei gegenüber liegende Tast- und Stützräder alle übrigen an Achsschenkelbolzen (14) mit Hochachsen (13) geführt sind, so dass sich diese um diese Hochachsen (13) ausrichtend als Nachlaufräder auf den momentanen Kurvenradius einstellen können.

2. Heuwerbungsmaschine nach Anspruch 1, **dadurch gekennzeichnet, dass** wenigstens zwei Pendelachsen (8,8') etwa quer zur Fahrtrichtung (F) und wenigstens eine weitere Pendelachse (10) etwa in Fahrtrichtung (F) verläuft.

3. Heuwerbungsmaschine nach Anspruch 1 und 2, **dadurch gekennzeichnet, dass** wenigstens eine Doppelschwinge (9) als um eine Pendelachse (10) drehbeweglich gelagertes Querjoch ausgebildet ist.

4. Heuwerbungsmaschine nach Anspruch 3, **dadurch gekennzeichnet, dass** das Querjoch (10) beidendseitig je eine weitere Pendelachse (12,12') aufnehmende Doppelschwinge (11,11') mit je zwei Tast- und Stützrädern (4) aufweist.

5. Heuwerbungsmaschine nach Anspruch 1 bis 4, **dadurch gekennzeichnet, dass** wenigstens eines der Tast- und Stützräder (4) einen Achsschenkelbolzen (14) als Hochachse (13) aufweist.

6. Heuwerbungsmaschine nach Anspruch 1 bis 5, **dadurch gekennzeichnet, dass** der Durchmesser (d) der Rechkreisels (1) im Bereich von 3500 bis 4500 mm, und vorzugsweise bei etwa 3800 mm liegt.

## Claims

1. A hay-making machine for raking together crop material which is lying on the ground, comprising at least one rake rotor which is drivable rotationally about an upwardly directed rotor axis and which is fitted with rake tines and which can be supported on the ground by a chassis with at least two feeler and support wheels having feeler and support wheels in ground-copying relationship by means of at least three double rocker arms, **characterised in that** each double rocker arm (7, 7', 9), carried by swing axles of the chassis, has feeler and support wheels (4) which run approximately on a common circle concentrically with the rotor axis as closely as possible to the rake tines, wherein except for two oppositely disposed feeler and support wheels all others are guided on stub axle pins (14) with vertical axes (13) so that they can set themselves about said vertical axes (13) in aligning relationship as trailing wheels to the prevailing curve radius.

2. A hay-making machine according to claim 1 **characterised in that** at least two swing axles (8, 8') extend approximately transversely relative to the direction of travel (F) and at least one further swing axle (10) extends approximately in the direction of travel (F).

3. A hay-making machine according to claim 1 or claim 2 **characterised in that** at least one double rocker arm (9) is in the form of a transverse yoke mounted rotatably about a swing axle (10).

4. A hay-making machine according to claim 3 **characterised in that** at each end the transverse yoke (10) has a respective double rocker arm (11, 11') carrying a further swing axle (12, 12') and having two respective feeler and support wheels (4).

5. A hay-making machine according to claims 1 to 4 **characterised in that** at least one of the feeler and support wheels (4) has a stub axle pin (14) as a vertical axis (13).

6. A hay-making machine according to claims 1 to 5 **characterised in that** the diameter (d) of the rake rotor (1) is in the range of 3500 to 4500 mm and is preferably about 3800 mm.

## Revendications

1. Machine de fenaison destinée à ratisser la récolte reposant sur le sol, comprenant au moins un râteau rotatif équipé de dents de râteau, qui peut être entraîné en rotation autour d'un axe dirigé vers le haut et peut prendre appui sur le sol par l'intermédiaire d'un châssis doté de roues de jauge et d'appui, en suivant le relief du sol à l'aide d'au moins deux roues de jauge et d'appui présentant au moins trois mécanismes à biellette double, **caractérisée par le fait que** chaque mécanisme à biellette double (7, 7', 9) est monté sur des axes oscillants du châssis et comporte des roues de jauge et d'appui (4) qui roulent à peu près sur un cercle commun, de façon centrée par rapport à l'axe du râteau rotatif, aussi près que possible des dents de râteau, sachant qu'à l'exception de deux roues de jauge et d'appui situées en vis-à-vis, toutes les autres roues sont guidées sur des fusées (14) à axes verticaux (13), de sorte qu'elles peuvent s'orienter autour de ces axes verticaux (13) et s'adapter en tant que roues suiveuses au rayon de courbe instantané.

2. Machine de fenaison selon la revendication 1, **caractérisée par le fait qu**'au moins deux axes oscillants (8, 8') sont sensiblement perpendiculaires au sens d'avancement (F) et au moins un autre axe oscillant (10) s'étend sensiblement dans le sens d'avancement (F).

3. Machine de fenaison selon les revendications1 et 2, **caractérisée par le fait qu**'au moins un mécanisme à biellette double (9) est réalisé sous forme de traverse montée mobile en rotation autour d'un axe oscillant (10).

4. Machine de fenaison selon la revendication 3, **caractérisée par le fait que** la traverse (10) comporte à ses deux extrémités respectivement un autre mécanisme à biellette double (11, 11) recevant un axe oscillant (12, 12'), avec chaque fois deux roues de jauge et d'appui (4).

5. Machine de fenaison selon les revendications 1 à 4, **caractérisée par le fait qu**' au moins l'une des roues de jauge et d'appui (4) présente une fusée (14) en tant qu'axe vertical (13).

6. Machine de fenaison selon les revendications 1 à 5, **caractérisée par le fait que** le diamètre (d) du râteau rotatif (1) est compris dans la plage allant de 3500 à 4500 mm et est de préférence d'environ 3800 mm.
